# FASCICULE DE BREVET EUROPEEN

(11) **EP 2 668 850 B1**
(45) Date de publication et mention de la délivrance du brevet: **29.10.2014**
(21) Numéro de dépôt: 13160241.9
(22) Date de dépôt: 20.03.2013
(51) Int. Cl.: A23L 1/00, A23L 1/053, A23L 1/0534, A23L 1/054, A23L 1/308, A23P 1/08, A21D 13/00

(54) **Complément alimentaire solide pour sandwich, procédé de fabrication et sandwich comprenant un tel complément alimentaire solide**
Festes Nahrungsergänzungsmittel für Sandwich, Herstellungsverfahren und ein solches festes Nahrungsergänzungsmittel umfassendes Sandwich
Solid food supplement for sandwich, manufacturing method and sandwich including such a solid food supplement

(30) Priorité: 31.05.2012 FR 1201552
(43) Date de publication de la demande: 04.12.2013
(73) Titulaire: Laboratoire Sensis, 11000 Carcassonne (FR)
(72) Inventeur: Jazeron, Gildas, 11000 Carcassonne (FR)
(74) Mandataire: Cabinet BARRE LAFORGUE & associés

(56) Documents cités:
- EP-A1- 2 335 921
- EP-A2- 0 537 554
- WO-A1-2006/103698

## Description

L'invention concerne un complément alimentaire solide pour sandwich, ledit complément alimentaire solide étant sous la forme d'une garniture souple à insérer entre deux tranches de pain dudit sandwich. Elle s'étend aussi à un procédé de fabrication d'un tel complément alimentaire solide et un sandwich comprenant un tel complément alimentaire solide.

Le besoin journalier en fibres alimentaires d'un humain adulte est compris entre 25 g et 35 g. Or, les modes de vie et d'alimentation de l'humain adulte, en particulier dans les pays technologiquement avancés, tend à diminuer la proportion des fibres alimentaires (fruits, légumes, pain) au profit des protéines -notamment des protéines animales-.

À titre d'exemple, la consommation quotidienne moyenne de pain en France est passée de 800 g il y a 100 ans à 150 g actuellement en privilégiant les pains à mie blanche qui sont moins riches en fibres et plus riches en glucides métabolisables.

Il en résulte que l'apport quotidien (ou ration quotidienne) en fibres alimentaires -notamment en fibres alimentaires solubles et en fibres alimentaires insolubles- de l'humain adulte contemporain est de l'ordre de 15 g dans les pays technologiquement avancés.

L'alimentation quotidienne de l'homme occidental ne permet pas de satisfaire le besoin journalier d'un homme adulte en fibres alimentaires. Le déficit quotidien en fibres alimentaires est donc de l'ordre de 10 à 20 g.

À titre d'exemple, une tranche de pain brun contient de l'ordre de 2 g de fibres alimentaires et une portion de fruits ou de légumes contient sensiblement de 2 g à 3 g de fibres alimentaires. Pour satisfaire le besoin journalier en fibres alimentaires d'un humain adulte, il conviendrait de multiplier par 5 à 10 la quantité de pain, de fruits et/ou de légumes dans la ration alimentaire. Compte tenu des habitudes alimentaires, en particulier du régime carné privilégié dans les pays technologiquement avancés, de nouvelles formes de nourritures riches en fibres alimentaires doivent être développées.

L'invention vise donc à résoudre le problème de la sous-alimentation en fibres alimentaires.

Une ration quotidienne optimale en fibres alimentaires, c'est-à-dire comprise entre 25 g et 35 g permet une amélioration du péristaltisme intestinal, soit de façon mécanique par contact des fibres notamment des fibres insolubles- avec la paroi intestinale, soit de façon indirecte par l'augmentation du volume du bol alimentaire dans l'estomac. Une telle augmentation du volume du bol alimentaire est liée non seulement à l'hydratation des fibres alimentaires dans l'estomac mais aussi à l'accroissement de la flore bactérienne.

On connait de EP 0 166 824 un procédé de fabrication d'une composition de fibres diététiques sensiblement exempte de matières digestibles dans lequel on choisit une préparation de son de maïs, puis on extrait et on élimine les matières grasses de ladite préparation de son de maïs par traitements successifs avec de l'éther de pétrole, puis on traite la préparation de son de maïs dégraissée par une protéase de façon à extraire les protéines de ladite préparation de son de maïs, puis on traite la préparation de son de maïs dégraissée et dé-protéinée par une amylase de façon à extraire les hydrates de carbone de ladite préparation de son de maïs. Les fibres insolubles ainsi obtenues sont mélangées avec une solution aqueuse de pectine, séchées pour éliminer l'excès d'humidité et pour former une poudre sèche contenant des fibres insolubles enrobées de pectine.

Un tel procédé est limité dans ses applications à l'élimination des matières digestibles d'une composition de fibres alimentaires et à la fabrication d'une poudre sèche comprenant ces fibres alimentaires. En particulier, un tel procédé trouve ses applications dans la fourniture d'un complément alimentaire hypocalorique. Un tel procédé ne permet pas de former une garniture souple pour sandwich et n'en présente pas les avantages organoleptiques.

En outre, l'inventeur a observé que la proportion massique maximale de fibres alimentaires susceptible de pouvoir être incorporée dans un mets -notamment dans du pain- tout en conservant des propriétés organoleptiques et de texture du pain sensiblement conservées par rapport au mets non complémenté en fibre est de l'ordre de 8 %.

L'invention vise donc un complément alimentaire solide adapté pour pouvoir être incorporé dans un sandwich et pour pouvoir augmenter la proportion massique en fibre de ce sandwich au-delà de la valeur de 8 % massique sans toutefois constituer un apport calorique supplémentaire dans la ration quotidienne.

L'invention vise donc un complément alimentaire solide adapté pour augmenter la ration quotidienne en fibres alimentaires et qui soit hypocalorique.

On connait des biscottes -notamment des biscottes à base de seigle- commercialisées sous la marque "WASA^{®}" riches en fibres alimentaires. Une telle biscotte comprend de l'ordre de 24 g de fibres pour 100 g. Une telle biscotte est un produit croustillant, sensiblement sec et qui ne peut être consommé en quantité suffisante pour atteindre la ration quotidienne en fibres alimentaires d'un humain adulte.

On connait aussi de EP 1 290 952 un complément alimentaire comprenant entre 1 % et 50 % de fibres alimentaires composées de fibres alimentaires hydrosolubles difficilement fermentables et de fibres alimentaires hydrosolubles fermentables et dans lesquelles le rapport massique entre les fibres alimentaires hydrosolubles fermentables et les fibres alimentaires hydrosolubles difficilement fermentables est comprise entre 0,1 et 3. Un tel complément alimentaire est limité dans sa formulation à un biscuit, à une gaufrette, à des flocons, à des comprimés, à des granules et à une boisson.

En France, 70 % de la population active consomme un sandwich à l'heure du déjeuner. Ce sandwich peut être constitué de pain de forme allongée dénommé baguette en France, ou sous la forme de tranches de pain de mie et souvent de forme triangulaire. Dans ce dernier cas, on parle de sandwich de type "club". En fait, de tels sandwichs ne contiennent pas une quantité suffisante de fibres alimentaires et ne permettent pas, par nature, de satisfaire le besoin journalier en fibres alimentaires d'un humain adulte.

L'invention vise à pallier ce déficit en proposant un complément alimentaire solide apte à augmenter la ration quotidienne en fibres alimentaires d'un humain adulte.

L'invention vise un tel complément alimentaire solide adapté pour conférer une sensation de satiété chez le consommateur en diminuant la ration alimentaire nécessaire à l'obtention de ladite sensation de satiété.

L'invention vise un tel complément alimentaire solide adapté pour pouvoir permettre une régulation de la glycémie, une régulation de la triglycéridémie -notamment dans le cas d'hyper-triglycéridémie-et une régulation de la cholestérolémie.

L'invention vise un tel complément alimentaire solide pour l'amélioration de la glycémie de patients atteints de diabète de type II et/ou d'obésité.

L'invention vise aussi un tel complément alimentaire solide adapté pour pouvoir diminuer le risque de cancer du colon.

L'invention concerne un complément alimentaire solide comprenant :
- une composition de fibres alimentaires comprenant:
   ▪ une quantité d'au moins une fibre alimentaire insoluble choisie dans le groupe formé des celluloses, des hémicelluloses et des lignines, et ;
   ▪ une quantité d'au moins une fibre alimentaire, dite fibre alimentaire hydrosoluble, résistante aux amylases humaines et présentant une solubilité dans l'eau supérieure à 10 g/L à 20°C, et ;
- une proportion d'eau comprise entre 10% et 35% -notamment comprise entre 15 % et 35 %, particulièrement comprise entre 20 % et 35 %, plus particulièrement comprise entre 20 % et 30 %, notamment de l'ordre de 25 %- en masse du complément alimentaire solide ;
caractérisé en ce que le complément alimentaire solide est en forme de feuille souple présentant une épaisseur sensiblement comprise entre 1 mm et 5 mm et adapté pour pouvoir être inséré entre deux tranches de pain d'un sandwich.

Dans tout le texte, on adopte la terminologie suivante :
- "fibre alimentaire" désigne un aliment qui n'est pas susceptible d'être digéré dans les voies digestives naturelles chez l'Homme. Une telle fibre alimentaire est constituée d'au moins un polymère choisi dans le groupe formé des lignines et des polysaccharides -notamment d'une pluralité de polysaccharides- d'origine végétale, à l'exception de l'amidon qui est sensible à la digestion chez l'homme. On identifie une fibre alimentaire par des méthodes normalisées et connues en elles-mêmes de l'homme du métier. Une première méthode préconisée par l'ANSES (anciennement AFSSA) est une méthode décrite par l'AOAC (*"Association of Analytical Communities"*) et référencée AOAC 985.29. Une composition de fibres alimentaires, qui est donc non digestible et non assimilable par l'homme et qui est éliminée dans les selles, peut provenir de différentes sources, par exemple :
   ▪ du son (c'est-à-dire de l'enveloppe du caryopse) d'une céréale telle que par exemple le blé, le seigle, l'orge, l'avoine, le maïs, le riz, l'épeautre et le soja -notamment les tourteaux de soja qui contiennent plus de 40 % en masse de fibres alimentaires-,
   ▪ de légumes (asperges, haricots et pois verts, choux de Bruxelles, carottes...),
   ▪ de graines de plantes légumineuses -par exemple, de lentilles, de pois secs (entier, cassés, chiches), de fèves et de haricots secs, de flageolets,
   ▪ de fruits, par exemple de pommes, d'oranges, de pamplemousses, de fraises, de poires, de figues, d'abricots, de bananes, de dattes, de citron, et ;
   ▪ de graines oléagineuses (noix) ;
- "fibre alimentaire soluble" désigne une fibre alimentaire susceptible de former un gel plus ou moins visqueux au contact de l'eau dans laquelle les fibres alimentaires sont solubles. À titre d'exemples non limitatifs de fibres alimentaires solubles, on connait :
   ▪ les fructanes qui sont des homopolymères de fructose -notamment l'inuline, qui est un homopolymère d'unités fructose en liaison β(1→2)-,
   ▪ les pectines qui sont des hétéropolymères polysaccaridiques constitués d'un acide uronique -notamment d'acide glucuronique ou d'acide galacturonique- et de rhamnose,
   ▪ les béta-glucanes (β-glucanes) qui sont des polymères de D-glucose liés par des liaisons de type β(1→3), β(1→4 ou β(1→6)),
   ▪ la gomme arabique qui est produite à l'état d'exsudat par les arbres de la famille des acacias et est constituée de polysaccharides acides formés d'unités D-galactose, L-arabinose, L-rhamnose et d'acide D-glucuronique et qui est référencée E 414 dans la liste des additifs alimentaires selon la directive européenne 96/77/CE du 2 décembre 1996,
   ▪ la gomme de caroube référencée E 410 dans la liste des additifs alimentaires (directive 96/77/CE),
   ▪ la gomme adragante (ou tragacanthe) qui est produite à l'état d'exsudat par les arbres du genre *Astragalus* et qui est référencée E 413 dans la liste des additifs alimentaires (directive 96/77/CE)
   ▪ la gomme de guar comprenant au moins un galactomannane formé d'une chaine de résidus D-mannopyranose en liaison β(1→4) sur laquelle sont substitués des unités de galactose en liaison β(1→6) et qui est référencée E 412 dans la liste des additifs alimentaires (directive 96/77/CE) ;
   ▪ les galactanes qui sont des homopolymères de galactose -notamment l'agar-agar extrait d'une algue rouge et référencé E 406 dans la liste des additifs alimentaires (directive 96/77/CE) ou le carraghénane extrait d'une algue rouge et référencé E 407 dans la liste des additifs alimentaires (directive 96/77/CE)-,
   ▪ les alginates qui sont des hétéropolymères d'acide mannuronique et d'acide glucuronique référencés E 400 à E 405 dans la liste des additifs alimentaires (directive 96/77/CE), et ;
   ▪ la gomme de xanthane qui est un hétéropolymère de glucose, de mannose, d'acide glucuronique et d'acide pyruvique et qui est référencée E 415 dans la liste des additifs alimentaires (directive 96/77/CE).

À titre d'exemples non limitatifs, une telle fibre alimentaire soluble est commercialisée sous les marques NUTRIOSE^{®} et LITESSE^{®} ;
- "fibre alimentaire insoluble", des fibres alimentaires telles que la cellulose (par exemple d'avoine, du soja et du son de céréales), les hémicelluloses (son de blé, germe de blé, céréales complètes, légumes) et les lignines qui sont insolubles dans l'eau. A titre d'exemple non limitatif, de telles fibres alimentaires insolubles sont commercialisées sous la marque VITACEL^{®} ;
- "souple" et ses dérivés qualifient un complément alimentaire solide susceptible de pouvoir changer de forme sous l'effet de son propre poids, ce changement de forme n'entraînant pas de détérioration structurelle dudit complément alimentaire solide.

On entend par "sandwich" un mets formé de deux tranches de pain entre lesquelles s'étendent des aliments. Ces aliments peuvent être des aliments froids (charcuterie, crudités, beurre, fromage, poisson cuit ou fumé). On parle alors de sandwich ou de sandwich "club" réalisé à partir de pain de mie à forte teneur en sucre. Ces aliments peuvent être des aliments chauds (viande hachée -notamment de la viande hachée de boeuf cuite-, fromage fondu. On parle alors de "hamburger" tel que distribué dans les chaines de restauration rapide. Le pain est en général en partie composé de farine (produit pulvérulent provenant de la mouture de grains d'une céréale -notamment de blé tendre- ou de certaines légumineuses) comprenant de l'amidon, de sel, d'eau et de levain. Le pain peut être du pain de froment, du pain de gruau, du pain de seigle, du pain complet, du pain de blé -notamment de blé tendre ou de blé dur-, du pain d'avoine, du pain d'orge, du pain de maïs, du pain blanc, du pain bis ou pain complet, du pain noir comprenant de la farine de sarrasin, du pain de son, du pain de mie selon le lieu de fabrication du pain et la nature de la farine. Ces pains peuvent être des pains de toutes formes, notamment de forme ronde (boule, couronne, miche), de forme allongée (baguette, flute, parisien, bâtard).

La méthode AOAC 985.29 de séparation des de fibres alimentaires est une méthode à mettre en oeuvre *in vitro* qui comprend :
- une étape de digestion enzymatique de l'échantillon par au moins une alpha-amylase, au moins une protéase et au moins une amylo-glucosidase -notamment au moins une α-amylase- suivie de ;
- une étape de traitement de l'hydrolysat par l'éthanol, dans laquelle on réalise une précipitation sélective des fibres hydrosolubles et une extraction des protéines et du glucose, et ;
- une étape de lavage du précipité, de séchage du précipité lavé et de pesée du précipité sec.

On détermine ainsi la présence de fibres alimentaires dans le complément alimentaire solide selon l'invention et on détermine la proportion massique de la composition de fibres alimentaires dans le complément alimentaire solide selon l'invention.

D'autres méthodes pour le dosage des fibres alimentaires totales d'un échantillon sont connues. On connait par exemple la méthode de Gordon (AOAC 2001.03). On connait aussi une méthode de traitement enzymatique dans des conditions ménagées dans lequel on réalise l'hydrolyse par une alpha-amylase à basse température -notamment à une température de l'ordre de 37°C- et dans laquelle l'amidon résistant à la digestion dans le tube digestif humain est préservé de l'hydrolyse ménagée à basse température et est donc comptabilisé dans la masse de fibres insolubles.

On détermine la proportion d'eau du complément alimentaire solide par des méthodes gravimétriques connues en elles-mêmes. Pour ce faire, on réalise une pesée en deux étapes. Dans une première étape de pesée, on réalise une première pesée du complément alimentaire solide selon l'invention (m₁) à l'équilibre dans l'air atmosphérique à la pression et à la température ambiantes, puis on réalise un séchage du complément alimentaire solide à une température de l'ordre de 130°C pendant une durée nécessaire pour obtenir une masse (m₂) du complément alimentaire solide, mesurée lors d'une deuxième étape de pesée, qui reste sensiblement constante lors du séchage. On calcule la différence (m₁ - m₂) de la masse d'eau du complément alimentaire solide et on divise cette différence (m₁ - m₂) par la valeur m₁ pour obtenir la proportion d'eau.

L'inventeur a observé de façon totalement surprenante qu'un tel complément alimentaire solide en forme de feuille est non seulement adapté pour pouvoir être inséré entre deux tranches de pain d'un sandwich et pour pouvoir augmenter la ration quotidienne en fibres alimentaires d'un tel sandwich, et qu'il permet une telle augmentation de la ration quotidienne en fibres alimentaires sans augmenter significativement le pouvoir calorique du sandwich et sans modifier significativement les propriétés organoleptiques et de texture dudit sandwich.

En particulier, l'inventeur a observé qu'une augmentation de la ration quotidienne en fibres alimentaires d'une valeur de 8 g par tranche de 1000 calories ingérées permet d'envisager une perte de poids de 2 Kg sur une période de 20 mois. Une telle complémentation de la ration quotidienne en fibres alimentaire est rendue possible par un complément alimentaire solide selon l'invention qui est acceptable pour le consommateur, tant pour ce qui concerne l'odeur, le goût et la texture conférés par complément alimentaire solide qui restent sensiblement neutres.

Avantageusement, le complément alimentaire solide comprend une proportion d'eau comprise entre 15 % et 35 % en masse du complément alimentaire solide.

Il est possible que le complément alimentaire présente une proportion d'eau comprise entre 10% et 35%, et en particulier comprise entre 10% et 15%, L'inventeur a observé qu'un tel complément alimentaire solide présente une souplesse permettant l'insertion du complément alimentaire solide dans un sandwich et sa consommation tout en permettant aussi sa conservation dans un emballage hermétique sans nécessiter l'utilisation d'agent de conservation ni d'étape de stérilisation.

Avantageusement et selon l'invention, la composition de fibres alimentaires présente une proportion massique dans le complément alimentaire solide supérieure à 10 %. Avantageusement la composition de fibres alimentaires présente une proportion massique dans le complément alimentaire solide supérieure à 15 %. En particulier, la composition de fibres alimentaires présente une proportion massique dans le complément alimentaire solide supérieure à 20 %. Préférentiellement, la composition de fibres alimentaires présente une proportion massique dans le complément alimentaire solide supérieure à 30 %, notamment supérieure à 50 %. Dans un mode de réalisation particulièrement avantageux et selon l'invention, la composition de fibres alimentaires présente une proportion massique dans le complément alimentaire solide comprise entre 50 % et 85 %.

Avantageusement et selon l'invention, le complément alimentaire solide comprend une proportion massique de fibres alimentaires insolubles comprise entre 10 % et 30 %. On détermine la proportion massique de fibres alimentaires insolubles dans le complément alimentaire solide par une méthode décrite par l'AOAC et référencée AOAC 2009.1. Cette méthode est adaptée pour permettre de déterminer la teneur en fibres alimentaires insolubles (IDF pour *"Insoluble Dietary Fibers"*) dans un échantillon, sa teneur en fibres solubles de haut poids moléculaire (FSHPM ou HMWSDF pour *"High Molecular Weight Soluble Dietary Fibers"*) et sa teneur en fibres solubles de bas poids moléculaire (FSBPM ou LMWSDF pour *"Low Molecular Weight Soluble Dietary Fibers"*). Dans une telle méthode, l'échantillon à analyser est traité en suspension aqueuse par une alpha-amylase -par exemple une alpha-amylase pancréatique- et une amyloglucosidae pendant 16 heures à 37°C. La réaction est interrompue par l'addition d'une protéase. Le solide en suspension formé des fibres alimentaires insolubles est séparé de la phase aqueuse, lavé, séché et pesé, la phase aqueuse contenant les fibres alimentaires solubles de bas et haut poids moléculaire. On réalise ensuite une précipitation par l'éthanol des fibres alimentaires de haut poids moléculaire et leur séparation par filtration liquide/solide. Les fibres alimentaires solubles de bas poids moléculaire sont analysées par HPLC.

Avantageusement, on identifie la cellulose dans le complément alimentaire solide et/ou dans la fraction de fibres alimentaires par des méthodes connues en elles-mêmes. Par exemple, on identifie la cellulose dans le complément alimentaire solide et/ou dans la fraction de fibres alimentaires par une méthode conforme à la norme NF V 03-040/1993.

Avantageusement, on identifie les hémicelluloses dans le complément alimentaire solide et/ou dans la fraction de fibres alimentaires par des méthodes connues en elles-mêmes. Par exemple, on identifie les hémicelluloses dans le complément alimentaire solide et/ou dans la fraction de fibres alimentaires par une méthode conforme à la norme NF V 18-122.

Avantageusement, on identifie les lignines dans le complément alimentaire solide par des méthodes connues en elles-mêmes. Par exemple, on identifie les lignines dans le complément alimentaire solide et/ou dans la fraction de fibres alimentaires par une méthode conforme à la norme NF V 18-122.

Avantageusement et selon l'invention, chaque fibre alimentaire hydrosoluble de la composition de fibres alimentaires est choisie dans le groupe formé :
- des polysaccharides acides d'une gomme arabique (aussi connue sous la dénomination "gomme d'acacia"),
- des polysaccharides d'une pectine de fruit,
- des polysaccharides d'une gomme de guar,
- des polysaccharides d'une gomme de caroube,
- des polysaccharides d'agar-agar (référencé E406 dans la liste des additifs alimentaires),
- des polysaccharides acides d'un alginate (polymère saccharidique d'acide mannuronique -le cas échéant au moins partiellement acétylé- et d'acide guluronique),
- des polysaccharides de carraghénane (galactane référencé E407 de la liste des additifs alimentaires),
- des polydextroses,
- des fructo-oligosaccharides, notamment obtenus par hydrolyse de l'inuline ou par des procédés du génie biotechnologique.

Avantageusement, le complément alimentaire solide comprend une gomme arabique formée majoritairement d'un polysaccharide acide et ramifié et constitué majoritairement de D-galactose, de L-arabinose, de L-rhamnose et d'acide D-glucuronique.

Avantageusement, le complément alimentaire solide comprend une gomme de guar formée d'au moins un composé galactomannane formé d'une chaine linéaire de résidus mannose β(1→4)-D-mannopyranose) au moins partiellement ramifiée par du galactose en position 6. Un tel composé galactomannane est une fibre alimentaire qui est hydrosoluble et de faible pouvoir calorique. La gomme de guar est un additif alimentaire largement utilisé dans l'industrie agro-alimentaire et est connue sous la référence E412.

Avantageusement, le complément alimentaire solide comprend une quantité de gomme de caroube formée d'au moins un composé galactomannane formé d'une chaine linéaire de résidus mannose (1,4-β-D-mannopyranose) au moins partiellement ramifiée par du galactose en position 6. Le ratio molaire mannose/galactose du galactomannane de la gomme de caroube est de l'ordre de 4.

Avantageusement et selon l'invention, le complément alimentaire solide comprend une proportion de fibres alimentaires hydrosolubles comprise entre 10 % et 60 %.

Avantageusement et selon l'invention, le complément alimentaire solide comprend une proportion d'au moins un polyol choisi dans le groupe formé des polyols présentant un pouvoir édulcorant inférieur ou égal à celui du saccharose et comprenant trois groupements hydroxyles -notamment du glycérol (E422)-, des polyols comprenant quatre groupements hydroxyles -notamment de l'érythritol (E968)-, des polyols comprenant cinq groupements hydroxyles -notamment du xylitol (E967), de l'arabitol ou de ribitol-, des polyols comprenant six groupements hydroxyles -notamment du sorbitol (E420), du dulcitol, du mannitol (E421)-, des polyols comprenant sept groupements hydroxyles -notamment du volemitol- des polyols disaccharidiques comprenant neuf groupements hydroxyles -notamment du maltitol (E965) qui est un polyol non fermentiscible, de l'isomaltitol (E953) et du lactitol (E966).

Avantageusement, le complément alimentaire solide comprend une proportion d'au moins un polyol choisi dans le groupe formé du glycérol, de l'érythritol, du xylitol, de l'arabitol, du ribitol, du sorbitol, du dulcitol, du mannitol, du volemitol, du maltitol, de l'isomaltitol et du lactitol.

Avantageusement, le complément alimentaire solide selon l'invention comprenant une proportion d'au moins un tel polyol présente une teneur en eau réduite, une activité d'eau (Aw) réduite, et une conservation microbiologique améliorée.

Avantageusement, le complément alimentaire solide comprend une proportion d'au moins un tel polyol adapté pour augmenter la souplesse du complément alimentaire solide, pour préserver la flexibilité du complément alimentaire solide (plastifiant) et pour améliorer la sensation d'humidité en bouche lors de l'ingestion du complément alimentaire solide.

Le maltitol (4-O-α-glucopyranosyl-D-sorbitol) est un additif alimentaire (E965) connu pour présenter un fort pouvoir sucrant mais un pouvoir calorique réduit (8,8 KJ/g) en comparaison du pouvoir calorique du sucrose (16,7 KJ/g)).

Avantageusement et selon l'invention, la proportion des polyols -notamment du maltitol- dans le complément alimentaire solide est comprise entre 0,1 % et 10 %, notamment comprise entre 1 % et 10 %, en particulier de l'ordre de 5 %.

L'inventeur a observé qu'un complément alimentaire solide selon l'invention comprenant une telle proportion de maltitol confère au sandwich dans lequel le complément alimentaire solide est inséré une odeur et un goût de croute de pain. L'inventeur a observé que le maltitol confère au complément alimentaire solide la souplesse nécessaire à l'insertion du complément alimentaire solide dans un sandwich. Un tel complément alimentaire solide n'est donc ni croustillant ni craquant et ne présente pas les propriétés hygroscopiques d'un complément alimentaire selon l'état de technique.

Avantageusement et selon l'invention, le complément alimentaire solide comprend une proportion d'un végétal frais, par exemple de cladodes de cactus. Avantageusement, le complément alimentaire solide comprend une proportion d'un végétal alimentaire frais. En particulier, avantageusement, le complément alimentaire solide comprend une proportion d'un fruit (par exemple de tomate, d'ananas). Un complément alimentaire selon l'invention peut aussi comprendre une proportion d'un légume, par exemple de haricot vert. Avantageusement, le complément alimentaire solide comprend un fruit ou un légume frais apportant la quantité d'eau nécessaire à la réalisation du complément alimentaire solide selon l'invention.

Avantageusement, le fruit frais ou le légume frais constitue une part pondérale majoritaire du complément alimentaire solide. Le complément alimentaire solide est désigné sous l'appellation de "fruit ou légume enrichi en fibre", conférant au complément alimentaire solide un statut d'aliment.

Avantageusement et selon l'invention, le complément alimentaire solide comprend une proportion d'une poudre d'un végétal déshydraté, par exemple d'une poudre de cladode de cactus déshydratée. Avantageusement, le complément alimentaire solide comprend une proportion d'une poudre d'un végétal alimentaire déshydraté. En particulier, avantageusement, le complément alimentaire solide comprend une proportion d'un fruit déshydraté (par exemple une poudre de tomate déshydratée, d'ananas déshydraté). Un complément alimentaire selon l'invention peut aussi comprendre une proportion d'une poudre d'un légume déshydraté, par exemple une poudre de haricot vert déshydraté.

Avantageusement et selon l'invention, le complément alimentaire solide comprend au moins un additif choisi dans le groupe formé des agents anti-flatulence -notamment de la curcumine, de l'échalote, du gingembre, de l'ail, du piment et de la cannelle-. Avantageusement, l'additif présente une proportion massique dans le complément alimentaire solide inférieure à 1 %.

Avantageusement et selon l'invention, le complément alimentaire solide comprend au moins un agent d'aromatisation choisi dans le groupe formé des arômes naturels -notamment des arômes naturels de fromage, d'ananas, de tomate, de kiwi- et des arômes artificiels -notamment des arômes artificiels de fromage, d'ananas, de tomate, de kiwi-. Avantageusement, l'agent d'aromatisation présente une proportion massique dans le complément alimentaire solide inférieure à 1 %.

Avantageusement et selon l'invention, le complément alimentaire solide comprend au moins un agent d'acidification choisi dans le groupe formé des acides organiques, notamment de l'acide malique, de l'acide lactique, de l'acide citrique et de l'acide acétique et de la D-glucurono-3,6-lactone. Avantageusement, l'agent d'acidification présente une proportion massique dans le complément alimentaire solide inférieure à 1 %.

Avantageusement et selon l'invention, le complément alimentaire solide comprend au moins un nutriment choisi dans le groupe formé des vitamines, des acides gras essentiels (-notamment des acides gras de la série oméga-3, des acides gras de la série oméga-6 et des acides gras de la série oméga-9-), des composés anti-oxydants et des composés immuno-stimulants.

Avantageusement, on choisit l'acide gras de la série oméga-3 dans le groupe formé des acides gras polyinsaturés comprenant l'acide α-linolénique (18:3), l'acide éicosapentaénoïque (20:5) et l'acide docosahexaénoïque (22:6).

Avantageusement, on choisit l'acide gras de la série oméga-6 dans le groupe formé des acides gras poly-insaturés, notamment de l'acide linoléique [18:2(n-6)], de l'acide octadécadiène-9,12-oïque, de l'acide gamma-linolénique [18:3(n-6)], de l'acide octadecatriène-6,9,12-oïque, de l'acide eicosadiènoïque [20:2(n-6)] ; de l'acide eicosadiène-11,14oïque, de l'acide dihomo-gamma-linolénique [20:3(n-6)], de l'acide eicosatriène-8,11,14-oïque, de l'acide arachidonique [20:4(n-6)] de l'acide eicosatetraène-5,8,11,14-oïque, de l'acide docosadiènoïque [22:2(n-6)], de l'acide docosadiène-13,16-oïque, de l'acide docosatetraènoïque [22:4(n-6)], de l'acide docosatetraène-7,10,13,16-oïque et de l'acide docosapentaènoïque.

Avantageusement, on choisit l'acide gras de la série oméga-9 dans le groupe formé de l'acide oléique (18:1), de l'acide gadoléique (20:1), de l'acide érucique (22:1) et de l'acide nervonique (24:1).

Avantageusement, la composition de fibres alimentaires comprend une quantité de protéines -notamment de protéines végétales choisies dans le groupe formé du gluten et des protéines de soja-.

L'invention vise aussi un tel complément alimentaire solide conditionné sous vide d'air dans un emballage. L'invention vise aussi un tel complément alimentaire solide stérile et adapté pour pouvoir être conservé, sans dégradation dudit complément alimentaire solide stérile, à température ambiante pendant une durée au moins égale à deux ans.

L'invention vise en outre un procédé de fabrication d'un tel complément alimentaire solide dans lequel :
- on choisit une composition de fibres alimentaires, comprenant :
   ▪ une quantité d'au moins une fibre alimentaire insoluble choisie dans le groupe formé des celluloses, des hémicelluloses et des lignines, et ;
   ▪ une quantité d'au moins une fibre alimentaire, dite fibre alimentaire hydrosoluble, résistante aux amylases humaines et présentant une solubilité dans l'eau supérieure à 10 g/L à 20°C, et ;
- on réalise une étape de mélange -notamment dans un malaxeur- de ladite composition de fibres alimentaires et d'une quantité d'eau adaptée pour pouvoir former une pâte solide non coulante, puis ;
- on met en forme ladite pâte solide non coulante -notamment par extrusion ou par laminage- de façon à former une pièce de pâte présentant une épaisseur comprise entre 1 mm et 5 mm, puis ;
- on réalise une étape de traitement thermique de ladite pièce de pâte lors duquel la pièce de pâte est portée à une température à coeur comprise entre 95°C et 130°C -notamment 121°C- pendant une durée comprise entre 1 min et 240 min de façon à former le complément alimentaire solide.

Avantageusement, l'étape de mélange est une étape de pétrissage. Avantageusement, après l'étape de mise en forme de la pâte solide non coulante, on réalise une étape de découpe de la pâte solide non coulante laminée.

Avantageusement et selon l'invention, on utilise le complément alimentaire dès que sa température est sensiblement de l'ordre de la température ambiante. On utilise alors le complément alimentaire solide de façon extemporanée sans aucune étape de conditionnement dudit complément alimentaire solide dans un emballage.

Dans une première variante d'un procédé selon l'invention, on réalise une étape de conditionnement du complément alimentaire solide dans un emballage apte à préserver les propriétés organoleptiques du complément alimentaire solide. Avantageusement, on réalise cette étape de conditionnement du complément alimentaire solide sous pression réduite dans l'air atmosphérique. Cependant, avantageusement, il est possible de réaliser cette étape de conditionnement du complément alimentaire solide sous une atmosphère contrôlée -notamment sous atmosphère stérile- de façon à permettre une conservation dudit complément alimentaire solide à température ambiante pendant une durée prolongée -notamment une durée de plusieurs mois-.

Dans une deuxième variante d'un procédé selon l'invention, on réalise l'étape de traitement thermique de façon à éliminer une partie de la quantité d'eau de la pâte solide non coulante et à obtenir un complément alimentaire solide selon l'invention présentant une proportion d'eau comprise entre 10 % et 35 % -notamment comprise entre 15 % et 35 %, particulièrement comprise entre 20 % et 35 %, plus particulièrement comprise entre 20 % et 30 %, notamment de l'ordre de 25 %- en masse du complément alimentaire solide.

Dans une troisième variante d'un procédé selon l'invention :
- on réalise l'étape de mélange de la composition de fibres alimentaires et d'une quantité d'eau de façon que la proportion d'eau soit comprise entre 10 % et 35 % -notamment comprise entre 15 % et 35 %, particulièrement comprise entre 20 % et 35 %, plus particulièrement comprise entre 20 % et 30 %, notamment de l'ordre de 25 %- en masse de la pâte solide non coulante, puis ;
- on met en forme ladite pâte solide non coulante par extrusion de façon à former une pièce de pâte présentant une épaisseur comprise entre 1 mm et 5 mm, puis ;
- on réalise une étape de conditionnement du complément alimentaire solide dans un emballage apte à préserver les propriétés organoleptiques du complément alimentaire solide et imperméable à l'eau, puis ;
- on réalise l'étape de traitement thermique de ladite pièce de pâte lors duquel la pièce de pâte est portée à une température à coeur comprise entre 75°C et 85°C pendant une durée comprise entre 1 min et 10 min de façon à former le complément aliment solide.

Avantageusement et selon l'invention, la composition de fibres alimentaires comprend une quantité d'au moins un polyol.

Avantageusement et selon l'invention, la quantité d'eau ajoutée à la composition de fibres alimentaire est adaptée pour présenter un rapport massique de la quantité d'eau et de la composition de fibres alimentaires inférieure à 35 %.

L'invention vise aussi l'utilisation d'un complément alimentaire selon l'invention comme garniture souple dans un sandwich, ledit complément alimentaire solide s'étendant entre deux tranches de pain dudit sandwich. L'invention vise ainsi l'utilisation d'un complément alimentaire solide inséré dans un sandwich.

L'invention vise aussi un sandwich comprenant un tel complément alimentaire solide selon l'invention sous la forme d'une garniture souple s'étendant entre deux tranches de pain dudit sandwich et adapté pour pouvoir conserver les qualités organoleptiques dudit sandwich tout en augmentant la ration quotidienne en fibre d'un consommateur.

L'invention concerne également un complément alimentaire solide, un procédé d'obtention d'un tel un complément alimentaire solide, l'utilisation d'un tel complément alimentaire solide et un sandwich comprenant un tel complément alimentaire solide caractérisés en combinaison par tout ou partie des caractéristiques mentionnées ci-dessus ou ci-après.

D'autres buts, caractéristiques et avantages de l'invention apparaîtront à la lecture de la description et des exemples suivants donnés uniquement à titre indicatif et non limitatif des modes de réalisation de l'invention.

Il va soi que l'invention peut faire l'objet de nombreuses variantes de réalisation et applications. En particulier le dimensionnement du complément alimentaire solide et son insertion dans un sandwich sont sujets à des infinités de variantes.

### EXEMPLE 1 - Analyse sensorielle d'un complément alimentaire solide selon l'invention contenant du gluten.

On réalise un complément alimentaire solide comprenant une proportion de fibres alimentaires de 80 % en masse de matière sèche et sans addition d'un arôme.

On mélange par malaxage :
- 6 g de gluten de blé (Viten Gluten de blé Vital, référence 611106, Roquette) correspondant à une proportion massique de 6 % dans le mélange initial,
- 44 g de fibres de blé solubles (Nutriose^{®} FB06, Wheat Dextrin, référence 338101, Roquette), correspondant à une proportion massique de 44 % dans le mélange initial,
- 25 g de fibres insolubles de blé (Vitacel^{®} WF200, Wheatfiber, référence WF-200-02250, J. Rettenmaier), correspondant à une proportion massique de 25 % dans le mélange initial,
- 2 g de sirop de maltitol (Maltidex™, référence M16311, Cargill), correspondant à une proportion massique de 2 % dans le mélange initial, et ;
- 23 g d'eau correspondant à une proportion massique de 23 % dans le mélange initial,
pendant une durée de l'ordre de 15 min de façon à former une pâte homogène. On soumet cette pâte, à température ambiante, à un traitement d'extrusion de façon à former un ruban présentant une épaisseur comprise entre 1 mm et 5 mm. On soumet la pâte conformée en ruban à un traitement thermique de stabilisation à une température à coeur de 80°C maintenue pendant au moins 3 minutes. On réalise en particulier cette étape de cuisson sur des tapis roulant chauffés à la température de 85°C. On laisse ensuite décroitre la température du complément alimentaire solide jusqu'à la température ambiante avant découpe et conditionnement. La composition de la pâte riche en fibres alimentaires formant le complément alimentaire solide est donnée au tableau 1 ci-après.

**Tableau 1**

| | % massique |
|---|---|
| Viten Gluten de blé Vital | 5,95 |
| Nutriose^{®} FB06 | 49,90 |
| Vitacel^{®} WF200 | 25,70 |
| Maltidex™ | 1,45 |
| Eau | 17,00 |

La proportion massique des fibres alimentaires solubles dans le complément alimentaire solide est de 41,92 % et la proportion des fibres alimentaires insolubles dans le complément alimentaire solide est de 24,93 %.

La proportion massique des fibres alimentaires solubles dans la matière sèche du complément alimentaire solide est de 50,50 % et la proportion de fibres alimentaires insolubles dans la matière sèche du complément alimentaire solide est de 30,04 %.

On réalise le conditionnement du complément alimentaire solide sous pression réduite ou sous atmosphère modifiée de façon à garantir une conservation de plusieurs mois à température ambiante.

On sélectionne un échantillon de personnes volontaires pour tester les qualités organoleptiques du complément alimentaire selon l'invention. Les résultats de l'enquête de satisfaction, effectuées sur 23 personnes d'âge compris entre 18 et 52 ans, relatifs aux tests effectués avec une tranche du complément alimentaire solide selon l'invention sont donnés au tableau 2 ci-après.

**Tableau 2**

| | Evaluation | | | |
|---|---|---|---|---|
| | Très mauvais | Médiocre | Bon | Excellent |
| Aspect général | | 7 | 16 | |
| Appréciation de l'odeur | | 3 | 20 | |
| Appréciation du goût | | 4 | 19 | |

L'enquête de satisfaction portant sur la tranche de complément alimentaire solide selon l'invention montre une bonne appréciation de l'aspect général, de l'odeur et du goût du complément alimentaire solide selon l'invention.

En outre, l'enquête de satisfaction a porté sur la perception du goût du complément alimentaire solide selon l'invention. Les quatre propositions qui ont été faites aux personnes interrogées sont les suivantes : Vous percevez le goût du complément alimentaire (1) très faiblement, (2) faiblement, (3) fortement ou (4) très fortement.

18 des 23 personnes interrogées se sont déclarées n'avoir perçu que très faiblement le goût du complément alimentaire solide selon l'invention et 5 personnes se sont déclarées n'avoir perçu que faiblement le goût du complément alimentaire solide selon l'invention. En particulier, selon les résultats de cette enquête, les personnes interrogées n'ont mentionné aucune sensation d'amertume du complément alimentaire solide testé.
Les résultats de l'enquête de satisfaction relatifs aux tests effectués avec une tranche de complément alimentaire solide pesant 25g inclue dans un sandwich du type "club" comprenant du pain de mie, du beurre, une tranche de jambon et du fromage sont donnés au tableau 3 ci-après.

**Tableau 3**

| | Evaluation | | | |
|---|---|---|---|---|
| | Très mauvais | Médiocre | Bon | Excellent |
| Aspect général | | | 20 | 3 |
| Appréciation de l'odeur | | | 21 | 2 |
| Appréciation du goût | | | 21 | 2 |
| Intensité du goût | | 6 | 17 | |

L'enquête de satisfaction portant sur le sandwich "club" comprenant la tranche de complément alimentaire solide selon l'invention montre une bonne appréciation de l'aspect général, de l'odeur et du goût du complément alimentaire solide selon l'invention pour une grande majorité des personnes interrogées. En particulier, 17 des 25 personnes interrogées ont déclaré ne pas avoir perçu une amertume du complément alimentaire solde selon l'invention dans le sandwich "club".

Les personnes testées ont été interrogées sur la texture du complément alimentaire solide selon l'invention. Sur une échelle allant de 1 à 10, la valeur 1 représentant une texture caoutchouteuse et la valeur 10 représentant une texture filandreuse, deux personnes ont donné la note de 1, quatre personnes ont donné la note de 3, dix personnes ont donné la note de 5, quatre personnes ont donné la note de 6 et 3 personnes ont donné la note de 7.

En parallèle, les personnes testées ont été interrogées sur la texture du complément alimentaire solide selon l'invention inséré dans un sandwich "club". Sur la même échelle allant de 1 à 10, deux personnes ont donné la note de 4, dix-sept personnes ont donné la note de 5 et cinq personnes ont donné la note de 6.

L'insertion du complément alimentaire solide selon l'invention dans un sandwich permet de conférer au complément alimentaire solide une texture améliorée par rapport à la texture du complément alimentaire seul.

### EXEMPLE 2 - Complément alimentaire solide selon l'invention comprenant une poudre de cladodes de cactus déshydratées.

On prépare de façon similaire au procédé décrit à l'exemple 1 :
- 259 g de fibres de blé solubles (Nutriose^{®} FB06, Wheat Dextrin, référence 338101, Roquette), contenant 212,38 g de fibres solubles,
- 69 g de fibres insolubles de blé (Vitacel^{®} WF200, Wheatfiber, référence WF-200-02250, J. Rettenmaier) contenant 66,3 g de fibres insolubles,
- 80 g de poudre de cladodes de cactus contenant 33,6 g de fibres, et ;
- 110,6 g d'eau.

La proportion de fibres dans le complément alimentaire solide est de 60,22 %. La proportion massique d'eau dans le complément alimentaire solide obtenu par un procédé selon l'invention est de 24,5 %.

### EXEMPLE 3 - Complément alimentaire solide selon l'invention comprenant une poudre de haricots verts déshydratés.

On prépare de façon similaire au procédé décrit à l'exemple 1 :
- 325 g de fibres de blé solubles (Nutriose^{®} FB06, Wheat Dextrin, référence 338101, Roquette) contenant 266,50 g de fibres solubles,
- 85 g de fibres insolubles de blé (Vitacel^{®} WF200, Wheatfiber, référence WF-200-02250, J. Rettenmaier), contenant 82.45 g de fibres insolubles,
- 141.5 g de haricots verts contenant 35,38 g de fibres, et ;
- 217 g d'eau.

La proportion massique de fibres dans le complément alimentaire solide obtenu par un procédé selon l'invention est de 50,01 %. La proportion massique d'eau dans le complément alimentaire solide obtenu par un procédé selon l'invention est de 29,4 %.

### EXEMPLE 4 - Complément alimentaire solide selon l'invention comprenant une poudre de tomate déshydratée.

On prépare de façon similaire au procédé décrit à l'exemple 1 :
- 210,4 g de fibres de blé solubles (Nutriose^{®} FB06, Wheat Dextrin, référence 338101, Roquette), contenant 172,53 g de fibres solubles,
- 94,6 g de fibres insolubles de blé (Vitacel^{®} WF200, Wheatfiber, référence WF-200-02250, J. Rettenmaier), contenant 84,86 g de fibres insolubles,
- 4,5 g d'agar contenant 4,5 g de fibres,
- 14,5 g de maltitol,
- 100,4 g de tomate déshydratée en poudre contenant 15,86 g de fibres, et ;
- 205 g d'eau.

La proportion massique de fibres dans le complément alimentaire solide obtenu par un procédé selon l'invention est de 52,2 %. La proportion massique d'eau dans le complément alimentaire solide obtenu par un procédé selon l'invention est de 34,8 %.

### EXEMPLE 5 - Complément alimentaire solide selon l'invention comprenant une poudre de tomate déshydratée.

On prépare de façon similaire au procédé décrit à l'exemple 1 :
- 260,4 g de fibres de blé solubles (Nutriose^{®} FB06, Wheat Dextrin, référence 338101, Roquette) contenant 213,53 g de fibres solubles,
- 105 g de fibres insolubles de blé (Vitacel^{®} WF200, Wheatfiber, référence WF-200-02250, J. Rettenmaier), contenant 101,85 g de fibres insolubles,
- 6 g d'agar contenant 6 g de fibres,
- 14,5 g de sirop de maltitol (Maltidex™, référence M16311, Cargill),
- 50 g de tomate déshydratée en poudre contenant 7,9 g de fibres, et ;
- 143 g d'eau.

La proportion massique de fibres dans le complément alimentaire solide obtenu par un procédé selon l'invention est de 56,88 %. La proportion massique d'eau dans le complément alimentaire solide obtenu par un procédé selon l'invention est de 26,3 %.

### EXEMPLE 6 - Complément alimentaire solide selon l'invention comprenant de la tomate fraiche entière.

On prépare de façon similaire au procédé décrit à l'exemple 1 :
- 260 g de fibres de blé solubles (Nutriose^{®} FB06, Wheat Dextrin, référence 338101, Roquette) contenant 213,2 g de fibres solubles,
- 125 g de fibres insolubles de blé (Vitacel^{®} WF200, Wheatfiber, référence WF-200-02250, J. Rettenmaier) contenant 121,25 g de fibres insolubles,
- 7,2 g d'agar contenant 7,2 g de fibres,
- 20,5 g de sirop de maltitol (Maltidex™, référence M16311, Cargill), et ;
- 201 g de tomate fraiche entière contenant 2,412 g de fibres.

La proportion massique de fibres dans le complément alimentaire solide obtenu par un procédé selon l'invention est de 56,06 %. La proportion massique d'eau dans le complément alimentaire solide obtenu par un procédé selon l'invention est de 29,5 %.

### EXEMPLE 7 - Complément alimentaire solide selon l'invention.

On prépare de façon similaire au procédé décrit à l'exemple 1 :
- 100 g de son de blé (Celnat, *Triticium sp. L.*) contenant 46 g de fibres insolubles ;
- 5 g d'huile de lin riche en acides gras oméga-3 ;
- 1 g d'acide citrique ;
- 100 g de fibres de blé solubles (Nutriose^{®} FB06, Wheat Dextrin, référence 338101, Roquette) contenant 82 g de fibres solubles ;
- 75 g de fibres insolubles de blé (Vitacel^{®} WF200, Wheatfiber, référence WF-200-02250, J. Rettenmaier) contenant 72,75 g de fibres insolubles, et ;
- 100 g de sirop de maltitol (Maltidex™, référence M16311, Cargill).

La proportion massique de fibres dans le complément alimentaire solide de l'exemple 7 est de 52,55 %. La proportion massique d'eau dans le complément alimentaire solide est de 13,9 % et la valeur Aw (« Activity water », mesurée avec un Aw-mètre de paillasse (Hygrolab-C1, Rotronic, Suisse), dans le complément alimentaire solide est de 0,59 attestant de sa stabilité microbiologique. Le complément alimentaire solide conformé en tranche de 2 mm d'épaisseur présente une élasticité relative adaptée pour sa consommation dans un sandwich.

### EXEMPLE 8 - Complément alimentaire solide selon l'invention aromatisé à la tomate.

On prépare de façon similaire au procédé décrit à l'exemple 1 :
- 100 g de son de blé (Celnat, *Triticium sp. L.*) contenant 46 g de fibres insolubles ;
- 5 g d'huile de lin riche en acides gras oméga-3 ;
- 1 g d'acide citrique ;
- 120 g de fibres de blé solubles (Nutriose^{®} FB06, Wheat Dextrin, référence 338101, Roquette) contenant 98,4 g de fibres solubles ;
- 130 g de fibres insolubles de blé (Vitacel^{®} WF200, Wheatfiber, référence WF-200-02250, J. Rettenmaier) contenant 126,10 g de fibres insolubles ;
- 130 g de sirop de maltitol (Maltidex™, référence M16311, Cargill), et ;
- 60 g de tomates en poudre contenant 19 g de fibres.

La proportion massique de fibres dans le complément alimentaire solide de l'exemple 7 est de 53,02 %. La proportion massique d'eau dans le complément alimentaire solide est de 12,6 % et la valeur Aw (« Activity water », mesurée avec un Aw-mètre de paillasse (Hygrolab-C1, Rotronic, Suisse), dans le complément alimentaire solide est de 0,68 attestant de sa stabilité microbiologique. Le complément alimentaire solide conformé en tranche de 2 mm d'épaisseur présente une élasticité relative adaptée pour sa consommation dans un sandwich.

### EXEMPLE 9 - Complément alimentaire solide selon l'invention aromatisé à la tomate.

On prépare de façon similaire au procédé décrit à l'exemple 1 :
- 25 g de son de blé (Celnat, *Triticium sp. L.*) contenant 11,5 g de fibres insolubles ;
- 1 g d'extrait de romarin (rosmanox)
- 6,3 g d'huile de lin riche en acides gras oméga-3 ;
- 1 g d'acide citrique ;
- 140 g de fibres de blé solubles (Nutriose^{®} FB06, Wheat Dextrin, référence 338101, Roquette) contenant 114,8 g de fibres solubles ;
- 190 g de fibres insolubles de blé (Vitacel^{®} WF200, Wheatfiber, référence WF-200-02250, J. Rettenmaier) contenant 184,3 g de fibres insolubles ;
- 140 g de sirop de maltitol (Maltidex™, référence M16311, Cargill) ;
- 136,8 g de tomates en poudre contenant 26 g de fibres, et ;
- 3,9 g de chlorure de sodium.

La proportion massique de fibres dans le complément alimentaire solide de l'exemple 7 est de 52,27 %. La proportion massique d'eau dans le complément alimentaire solide est de 12,6 % et la valeur Aw (« Activity water », mesurée avec un Aw-mètre de paillasse (Hygrolab-C1, Rotronic, Suisse), dans le complément alimentaire solide est de 0,64 attestant de sa stabilité microbiologique. Le complément alimentaire solide conformé en tranche de 2 mm d'épaisseur présente une élasticité relative adaptée pour sa consommation dans un sandwich.

## Revendications

1. Complément alimentaire solide comprenant :
- une composition de fibres alimentaires comprenant :
▪ une quantité d'au moins une fibre alimentaire insoluble choisie dans le groupe formé des celluloses, des hémicelluloses et des lignines, et ;
▪ une quantité d'au moins une fibre alimentaire, dite fibre alimentaire hydrosoluble, résistante aux amylases humaines et présentant une solubilité dans l'eau supérieure à 10 g/L à 20°C ;
- une proportion d'eau comprise entre 10 % et 35 % en masse du complément alimentaire solide ;
**caractérisé en ce que** le complément alimentaire solide est en forme de feuille souple présentant une épaisseur sensiblement comprise entre 1 mm et 5 mm et adapté pour pouvoir être inséré entre deux tranches de pain d'un sandwich.

2. Complément alimentaire selon la revendication 1, **caractérisé en ce que** la proportion d'eau est comprise entre 15% et 35%.

3. Complément selon l'une des revendications 1 ou 2, **caractérisé en ce que** la composition de fibres alimentaires présente une proportion massique dans le complément alimentaire solide supérieure à 10 %.

4. Complément selon l'une des revendications 1 à 3, **caractérisé en ce que** le complément alimentaire solide comprend une proportion de fibres alimentaires insolubles comprise entre 10 % et 30 %.

5. Complément selon l'une des revendications 1 à 4, **caractérisé en ce que** chaque fibre alimentaire hydrosoluble de la composition de fibres alimentaires est choisie dans le groupe formé :
- des polysaccharides acides d'une gomme arabique,
- des polysaccharides d'une pectine de fruit,
- des polysaccharides d'une gomme de guar,
- des polysaccharides d'une gomme de caroube,
- des polysaccharides d' agar-agar,
- des polysaccharides acides d'un alginate,
- des polysaccharides de carraghénane,
- des polydextroses, et ;
- des fructo-oligosaccharides.

6. Complément selon l'une des revendications 1 à 4, **caractérisé en ce qu'**il comprend une proportion de fibres alimentaires hydrosolubles comprise entre 10 % et 60 %.

7. Complément selon l'une des revendications 1 à 5, **caractérisé en ce qu'**il comprend une proportion d'au moins un polyol.

8. Complément selon l'une des revendications 1 à 7, **caractérisé en ce qu'**il comprend une proportion d'une poudre d'un végétal déshydraté.

9. Complément selon l'une des revendications 1 à 8, **caractérisé en ce qu'**il comprend au moins un additif choisi dans le groupe formé des agents anti-flatulence.

10. Complément selon l'une des revendications 1 à 9, **caractérisé en ce qu'**il comprend au moins un agent d'aromatisation choisi dans le groupe formé des arômes naturels et des arômes artificiels.

11. Complément selon l'une des revendications 1 à 10, **caractérisé en ce qu'**il comprend au moins un nutriment choisi dans le groupe formé des vitamines, des acides gras essentiels, des composés anti-oxydants et des composés immuno-stimulants.

12. Complément selon l'une des revendications 1 à 11, **caractérisé en ce qu'**il est conditionné sous vide d'air dans un emballage.

13. Procédé de fabrication d'un complément alimentaire solide selon l'une des revendications 1 à 12 dans lequel :
- on choisit une composition de fibres alimentaires, comprenant :
▪ une quantité d'au moins une fibre alimentaire insoluble choisie dans le groupe formé des celluloses, des hémicelluloses et des lignines, et ;
▪ une quantité d'au moins une fibre alimentaire, dite fibre alimentaire hydrosoluble, résistante aux amylases humaines et présentant une solubilité dans l'eau supérieure à 10 g/L à 20°C, et ;
- on réalise une étape de mélange -notamment dans un malaxeur- de ladite composition de fibres alimentaires et d'une quantité d'eau adaptée pour pouvoir former une pâte solide non coulante, puis ;
- on met en forme ladite pâte solide non coulante par extrusion de façon à former une pièce de pâte présentant une épaisseur comprise entre 1 mm et 5 mm, puis ;
- on réalise une étape de traitement thermique de ladite pièce de pâte lors duquel la pièce de pâte est portée à une température à coeur comprise entre 75°C et 85°C pendant une durée comprise entre 1 min et 10 min de façon à former le complément aliment solide.

14. Utilisation d'un complément alimentaire solide selon l'une des revendications 1 à 12 dans lequel le complément alimentaire solide est inséré dans un sandwich.

15. Sandwich comprenant un complément alimentaire solide selon l'une des revendications 1 à 12.

## Patentansprüche

1. Festes Nahrungsergänzungsmittel, umfassend:
eine Zusammensetzung aus Ballaststoffen, umfassend:
- eine Menge von mindestens einem unlöslichen Ballaststoff, ausgewählt aus der Gruppe, gebildet aus Cellulosen, Hemicellulosen und Ligninen, und
- eine Menge von mindestens einem Ballaststoff, genannt wasserlöslicher Ballaststoff, der gegen menschliche Amylasen widerstandsfähig ist und eine Löslichkeit in Wasser von mehr als 10 g/L bei 20 °C aufweist;
- ein Anteil von Wasser, der zwischen 10 Gew% und 35 Gew% des festen Nahrungsergänzungsmittels liegt;
**dadurch gekennzeichnet, dass** das feste Nahrungsergänzungsmittel die Form eines flexiblen Blatts mit einer Dicke aufweist, die im Wesentlichen zwischen 1 mm und 5 mm liegt und ausgelegt ist, um zwischen zwei Brotscheiben eines Sandwichs eingefügt werden zu können.

2. Nahrungsergänzungsmittel nach Anspruch 1, **dadurch gekennzeichnet, dass** der Anteil von Wasser zwischen 15 % und 35 % liegt.

3. Nahrungsergänzungsmittel nach einem der Ansprüche 1 oder 2, **dadurch gekennzeichnet, dass** die Zusammensetzung aus Ballaststoffen einen Massenanteil im festen Nahrungsergänzungsmittel von mehr als 10 % aufweist.

4. Ergänzungsmittel nach einem der Ansprüche 1 bis 3, **dadurch gekennzeichnet, dass** das feste Nahrungsergänzungsmittel einen Anteil von unlöslichen Ballaststoffen umfasst, der zwischen 10 % und 30 % liegt.

5. Ergänzungsmittel nach einem der Ansprüche 1 bis 4, **dadurch gekennzeichnet, dass** jeder wasserlösliche Ballaststoff der Zusammensetzung aus Ballaststoffen ausgewählt ist aus der Gruppe, gebildet aus:
- sauren Polysacchariden eines Gummi Arabicum,
- Polysacchariden eines Fruchtpektins,
- Polysacchariden eines Guargummis,
- Polysacchariden eines Johannisbrotgummis,
- Polysacchariden von Agar-Agar.
- Polysacchariden von Säuren eines Alginats,
- Polysacchariden von Carragheen,
- Polydextrosen und
- Fructooligosacchariden.

6. Ergänzungsmittel nach einem der Ansprüche 1 bis 4, **dadurch gekennzeichnet, dass** es einen Anteil von unlöslichen Ballaststoffen umfasst, der zwischen 10 % und 60 % liegt.

7. Ergänzungsmittel nach einem der Ansprüche 1 bis 5, **dadurch gekennzeichnet, dass** es einen Anteil von mindestens einem Polyol umfasst.

8. Ergänzungsmittel nach einem der Ansprüche 1 bis 7, **dadurch gekennzeichnet, dass** es einen Anteil eines Pulvers einer entwässerten Pflanze umfasst.

9. Ergänzungsmittel nach einem der Ansprüche 1 bis 8, **dadurch gekennzeichnet, dass** es mindestens einen Zusatzstoff umfasst, ausgewählt aus der Gruppe gebildet aus Mitteln zur Behandlung von Blähungen.

10. Ergänzungsmittel nach einem der Ansprüche 1 bis 9, **dadurch gekennzeichnet, dass** es mindestens ein Aromatisierungsmittel umfasst, ausgewählt aus der Gruppe, gebildet aus natürlichen Aromen und künstlichen Aromen.

11. Ergänzungsmittel nach einem der Ansprüche 1 bis 10, **dadurch gekennzeichnet, dass** es mindestens einen Nährstoff umfasst, ausgewählt aus der Gruppe, bestehend aus Vitaminen, essenziellen Fettsäuren, antioxidierenden Verbindungen und immunstimulierenden Verbindungen.

12. Ergänzungsmittel nach einem der Ansprüche 1 bis 11, **dadurch gekennzeichnet, dass** es unter Vakuum in einer Hülle verpackt ist.

13. Verfahren zur Herstellung eines festen Nahrungsergänzungsmittels nach einem der Ansprüche 1 bis 12, wobei:
- eine Zusammensetzung aus Ballaststoffen gewählt wird, umfassend:
- eine Menge von mindestens einem unlöslichen Ballaststoff, ausgewählt aus der Gruppe, gebildet aus Cellulosen, Hemicellulosen und Ligninen, und
- eine Menge von mindestens einem Ballaststoff, genannt wasserlöslicher Ballaststoff, der gegen menschliche Amylasen widerstandsfähig ist und eine Löslichkeit in Wasser von mehr als 10 g/L bei 20 °C aufweist; und
- ein Schritt des Mischens - insbesondere in einem Mischer - der Zusammensetzung aus Ballaststoffen und einer Menge von Wasser erfolgt, die ausgelegt ist, um eine nicht fließende feste Paste zu bilden, dann
- wird die nicht fließende feste Paste durch Extrusion geformt, um ein Pastenstück zu bilden, das eine Dicke aufweist, die zwischen 1 mm und 5 mm liegt, dann
- erfolgt ein Schritt der thermischen Behandlung des Pastenstücks, während dessen das Pastenstück auf eine Kerntemperatur, die zwischen 75 °C und 85 °C liegt, während einer Dauer zwischen 1 min und 10 min gebracht wird, um das feste Nahrungsergänzungsmittel zu bilden.

14. Verwendung eines festen Nahrungsergänzungsmittels nach einem der Ansprüche 1 bis 12, wobei das feste Nahrungsergänzungsmittel in ein Sandwich eingeführt wird.

15. Sandwich, umfassend ein festes Nahrungsergänzungsmittel nach einem der Ansprüche 1 bis 12.

## Claims

1. Solid food supplement comprising:
- a dietary fibre composition comprising:
▪ a quantity of at least one insoluble dietary fibre chosen from the group formed of celluloses, hemicelluloses and lignins, and
▪ a quantity of at least one dietary fibre, called water-soluble dietary fibre, that is resistant to human amylases and has a solubility in water of greater than 10 g/l at 20°C;
- a proportion of water of from 10% to 35% by mass of the solid food supplement;
**characterised in that** the solid food supplement is in the form of a flexible sheet which has a thickness of substantially from 1 mm to 5 mm and is adapted to be able to be inserted between two slices of bread of a sandwich.

2. Food supplement according to claim 1, **characterised in that** the proportion of water is from 15% to 35%.

3. Supplement according to either claim 1 or claim 2, **characterised in that** the proportion by mass of the dietary fibre composition in the solid food supplement is greater than 10%.

4. Supplement according to any one of claims 1 to 3, **characterised in that** the solid food supplement comprises a proportion of insoluble dietary fibres of from 10% to 30%.

5. Supplement according to any one of claims 1 to 4, **characterised in that** each water-soluble dietary fibre of the dietary fibre composition is chosen from the group formed of:
- acid polysaccharides of a gum arabic,
- polysaccharides of a fruit pectin,
- polysaccharides of a guar gum,
- polysaccharides of a locust bean gum,
- polysaccharides of agar-agar,
- acid polysaccharides of an alginate,
- polysaccharides of carrageenan,
- polydextroses, and
- fructo-oligosaccharides.

6. Supplement according to any one of claims 1 to 4, **characterised in that** it comprises a proportion of water-soluble dietary fibres of from 10% to 60%.

7. Supplement according to any one of claims 1 to 5, **characterised in that** it comprises a proportion of at least one polyol.

8. Supplement according to any one of claims 1 to 7, **characterised in that** it comprises a proportion of a dried vegetable powder.

9. Supplement according to any one of claims 1 to 8, **characterised in that** it comprises at least one additive chosen from the group formed of anti-flatulence agents.

10. Supplement according to any one of claims 1 to 9, **characterised in that** it comprises at least one flavouring agent chosen from the group formed of natural flavourings and artificial flavourings.

11. Supplement according to any one of claims 1 to 10, **characterised in that** it comprises at least one nutrient chosen from the group formed of vitamins, essential fatty acids, antioxidant compounds and immunostimulating compounds.

12. Supplement according to any one of claims 1 to 11, **characterised in that** it is packaged *in vacuo* in a packaging.

13. Method for producing a solid food supplement according to any one of claims 1 to 12, wherein:
- there is chosen a dietary fibre composition comprising:
▪ a quantity of at least one insoluble dietary fibre chosen from the group formed of celluloses, hemicelluloses and lignins, and
▪ a quantity of at least one dietary fibre, called water-soluble dietary fibre, that is resistant to human amylases and has a solubility in water of greater than 10 g/l at 20°C, and
- there is carried out a step of mixing - especially in a mixer - said dietary fibre composition and a quantity of water adapted to be able to form a solid, non-flowing paste, and then
- said solid, non-flowing paste is shaped by extrusion so as to form a piece of paste having a thickness of from 1 mm to 5 mm, and then
- a step of heat treatment of said piece of paste is carried out, during which the piece of paste is brought to a core temperature of from 75°C to 85°C for a period of from 1 minute to 10 minutes so as to form the solid food supplement.

14. Use of a solid food supplement according to any one of claims 1 to 12, wherein the solid food supplement is inserted in a sandwich.

15. Sandwich comprising a solid food supplement according to any one of claims 1 to 12.
